# FASCICULE DE BREVET EUROPEEN

(11) **EP 4 393 043 B1**
(45) Date de publication et mention de la délivrance du brevet: **07.05.2025**
(21) Numéro de dépôt: 22741338.2
(22) Date de dépôt: 14.06.2022
(51) Int. Cl.: H02J 7/00, B60L 53/60, B60L 58/13, B60L 58/15, B60L 58/16

(54) **PROCEDE DE GESTION D'UNE SESSION DE RECHARGE D'UN VEHICULE ELECTRIFIE POUR DETERMINER UN ETAT DE CHARGE CIBLE EN FIN DE CHARGE**
VERFAHREN ZUR VERWALTUNG EINES LADEVORGANGS EINES ELEKTRIFIZIERTEN FAHRZEUGS ZUR BESTIMMUNG EINES ZIELLADEZUSTANDS AM ENDE DES LADEVORGANGS
METHOD FOR MANAGING A CHARGING SESSION OF AN ELECTRIFIED VEHICLE TO DETERMINE A TARGET STATE OF CHARGE AT THE END OF CHARGING

(30) Priorité: 26.08.2021 FR 2108940
(43) Date de publication de la demande: 03.07.2024
(73) Titulaire: Stellantis Auto SAS, 78300 Poissy (FR)
(72) Inventeur: BAGHDADI, Issam, 78600 LE MESNIL LE ROI (FR); BENTAHAR, Imane, 78100 ST GERMAIN EN LAYE (FR); PETIT, Benjamin, 92500 RUEIL MALMAISON (FR)
(74) Mandataire: PSIP
(86) Numéro de dépôt international: PCT/FR2022/051138
(87) Numéro de publication internationale: WO 2023/025995

(56) Documents cités:
- WO-A1-2020/239577
- US-A1- 2013 015 860
- US-A1- 2013 234 664
- US-A1- 2013 257 387
- US-A1- 2018 086 223
- US-A1- 2021 138 928
- US-A1- 2021 218 073

## Description

La présente invention revendique la priorité de la demande française N°2108940 déposée le 26.08.2021.

Le domaine de l'invention concerne un procédé de gestion d'une recharge électrique d'une batterie de traction de véhicule électrifié. L'invention s'applique notamment aux véhicules automobiles électrifiés rechargeables à partir d'une borne de recharge.

Le système de batterie de traction représente le coût le plus important d'un véhicule électrifié. Les constructeurs automobiles cherchent donc constamment à améliorer la longévité de ce système. Classiquement, le système de batterie comporte un dispositif de supervision qui coopère généralement avec un calculateur de contrôle de la recharge électrique. Une recharge électrique sur borne extérieure s'opère dans un domaine d'état de charge, de tension et de température de la batterie délimité par le constructeur du véhicule afin d'empêcher un vieillissement accéléré des cellules électriques. En particulier, il est connu d'adapter le courant de charge en fonction de la température de la batterie. On connait également des stratégies de pré-conditionnement thermique de la batterie afin d'optimiser la durée de recharge pour éviter des limitations de courant et la dégradation des cellules électrochimiques.

En outre, on connait de l'état de la technique le document FR2952235A1 décrivant un procédé de recharge dans lequel on compare la tension mesurée aux bornes de la batterie avec un seuil de tension afin de piloter la fin de charge et dans laquelle le seuil est fourni par une table qui est fonction de la température mesurée et du courant circulant dans la batterie. L'usage de cette table vise à éviter les dégradations physiques de la batterie et améliorer sa longévité. On connait également le document US20130320934A1 décrivant une station de recharge où se trouve un parc de plusieurs bornes comprenant des moyens configurés pour estimer le courant de charge de chaque borne et pour déterminer si la charge d'un véhicule a pris fin lorsque la valeur du courant de charge devient inférieure à une valeur de référence.

On connait également du document de brevet US2018086223A1 un procédé conforme au préambule de la revendication 1.

Ces techniques, établies en conception du véhicule, présentent l'inconvénient de ne pas prendre en compte l'usage particulier qui en est fait. Pour cela, les constructeurs recherchent d'autres stratégies d'amélioration de la longévité se basant sur l'usage personnel. Il est connu par exemple de concevoir des fonctions de limitation du niveau d'état de charge cible lors d'une session de recharge ou de la valeur maximale du courant de charge. En réduisant l'état de charge cible ou le courant de charge maximum on réduit le stress électrochimique infligé quotidiennement aux cellules et donc leur longévité. Ces fonctions de limitations sont préprogrammées en conception du véhicule et paramétrables par l'utilisateur. Malheureusement, les utilisateurs maintiennent généralement le niveau cible de recharge à 100% par crainte de manque d'énergie en cas de besoin de roulage imprévu.

Dans le domaine de la téléphonie mobile, on connait des fonctions de supervision intelligente de la recharge. Certaines stratégies consistent à piloter une recharge nocturne en fonction de la configuration de l'heure l'alarme. La charge est pilotée progressivement durant la nuit pour se finaliser au niveau de charge maximum à l'heure de réveil de l'utilisateur. Cette fonction évite de maintenir la batterie au niveau de charge maximum durant la nuit entière, ce qui réduit à long terme la durée moyenne de stress appliqué à la batterie.

Ces solutions présentent l'inconvénient que l'utilisateur n'est pas assisté dans le choix de la valeur optimale de limitation de recharge en fonction de son usage.

L'invention vise à pallier les problèmes précités. Un objectif de l'invention est de limiter la durée d'utilisation d'une batterie à un état de charge maximum pour limiter les phénomènes de vieillissement des cellules électrochimiques. Un autre objectif est d'optimiser l'opération de recharge en fonction de l'usage de la batterie. Un autre objectif est d'assister l'utilisateur d'un véhicule électrifié pour paramétrer une valeur optimale qui permet de prolonger la durabilité de la batterie tout en restant compatible avec ses besoins de roulage et sans impacter ses habitudes de recharge.

L'invention est définie par les revendications indépendantes. Les modes particuliers de réalisation sont définis par les revendications dépendantes.

Plus précisément, l'invention concerne un procédé de gestion d'une session de recharge d'une batterie de traction pour un véhicule automobile électrifié comportant la détermination d'un niveau d'état de charge cible commandant l'arrêt de la session de recharge. Selon l'invention le procédé comporte les étapes suivantes :
- L'enregistrement d'une quantité d'énergie rechargée lors d'une session de recharge,
- La configuration du niveau d'état de charge cible en fonction de ladite quantité d'énergie rechargée.

Selon une variante, le procédé comporte en outre les étapes suivantes pour l'enregistrement de la quantité d'énergie rechargée :
- Lorsqu'on détecte le branchement du véhicule à une borne de recharge, l'acquisition de l'état de charge instantané de la batterie,
- Le calcul de l'écart de charge entre l'état de charge instantané et le niveau d'état de charge cible de la session de recharge.

Selon l'invention, le procédé comporte en outre les étapes suivantes :
- L'enregistrement d'un historique de recharge à partir de la quantité d'énergie rechargée à chaque session de recharge,
- La détermination d'une fonction de distribution cumulative de l'historique de recharge,
- La détermination d'une valeur d'un besoin d'énergie à partir de la fonction de distribution,
- La configuration du niveau d'état de charge cible à ladite valeur du besoin d'énergie.

Selon une variante, l'enregistrement de l'historique de recharge consiste à enregistrer le nombre d'occurrences de chaque valeur d'écart de charge dans une table de recharge.

Selon l'invention, la fonction de distribution est une fonction de probabilité cumulative modélisant la probabilité cumulative d'une quantité d'énergie rechargée à partir de l'historique de recharge et dans lequel la détermination de la valeur du besoin d'énergie comporte :
- La détermination d'une première quantité d'énergie couvrant une première probabilité de la fonction de distribution,
- La détermination d'une deuxième quantité d'énergie couvrant une deuxième probabilité de la fonction de distribution supérieure à la première probabilité,
- La sélection de la valeur maximum entre d'une part la première quantité additionnée d'une troisième quantité prédéterminée et, d'autre part la deuxième quantité.

Selon une variante, la valeur du besoin d'énergie est égale à la valeur maximum additionnée d'une quatrième quantité d'énergie prédéterminée.

Selon une variante, le niveau d'état de charge cible est mis à jour à chaque série de n sessions de recharge successives, où n étant un entier positif.

Selon une variante, le procédé comporte en outre à chaque mise à jour du niveau d'état de charge cible, la détermination d'une première et d'une deuxième valeur du niveau d'état de charge cible pour une première série et une deuxième série respectivement, la comparaison de la première et deuxième valeur, et lorsque l'écart est supérieur à un seuil prédéterminé, la réinitialisation de l'historique de recharge par la deuxième série, et lorsque l'écart est inférieur audit seuil, l'ajout de la deuxième série à l'historique de recharge.

Selon une variante, le procédé comporte en outre la communication du niveau d'état de charge cible à destination d'un système de supervision distante de la recharge de véhicules connectés à travers un réseau étendu de communication sans fil.

Selon une variante, le procédé comporte en outre l'opération d'une recharge électrique de la batterie du véhicule et la commande de l'arrêt de la recharge lorsque l'état de charge instantané atteint le niveau d'état de charge cible.

Il est prévu selon l'invention un véhicule automobile électrifié comportant un système de batterie de traction et un dispositif de gestion d'une session de recharge du système de batterie, dans lequel ledit dispositif est configuré pour mettre en œuvre le procédé de gestion d'une session de recharge selon l'un quelconque des modes de réalisation précédents.

L'invention permet d'adapter la recharge électrique en fonction de l'usage du véhicule et des habitudes de recharge de l'utilisateur pour proposer une gestion de la recharge préservant d'un vieillissement de la batterie. Grâce au procédé on améliore la longévité de la batterie. En outre, grâce à une interface adaptée on améliore l'ergonomie de la fonction de gestion de la batterie. Cela permet en outre une meilleure compréhension pour l'utilisateur afin de préserver le système de batterie.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente un mode de réalisation préférentiel d'un véhicule électrifié, coopérant avec un système de supervision distant, apte à mettre en œuvre le procédé selon l'invention.
[Fig. 2] représente un mode de réalisation préférentiel des modules fonctionnels de l'unité de supervision énergétique exécutant le procédé de gestion d'une session de recharge selon l'invention.
[Fig.3] représente une courbe modélisant une distribution cumulative des niveaux de charge rechargés par un utilisateur et permettant d'estimer un niveau cible de recharge selon l'invention.
[Fig.4] représente un mode de réalisation du procédé de gestion d'une session de recharge selon l'invention.
[Fig.5] représente un premier graphique illustrant l'évolution de l'état de charge d'une batterie durant plusieurs sessions de recharge successives pour un véhicule électrifié selon l'état de la technique sans application du procédé selon l'invention.
[Fig.6] représente un deuxième graphique illustrant l'évolution de l'état de charge d'une batterie dans lequel on compare la solution de l'état de la technique avec le procédé de gestion des sessions de recharge selon l'invention.

L'invention s'applique aux véhicules électrifiés, en particulier les véhicules automobiles rechargeables. Le procédé de gestion d'une session d'une recharge de batterie selon l'invention est décrit ici dans le cas d'exemple d'une recharge électrique d'un véhicule électrifié, hybride ou électrique, c'est-à-dire muni d'une chaine de traction électrifiée, au moyen d'une borne de recharge statique. Néanmoins, on envisage que le procédé selon l'invention s'applique pour d'autres systèmes de recharge, tels les systèmes utilisant des recharges électriques par induction. L'invention s'adresse particulièrement aux véhicules automobiles. Au sens de l'invention le terme session de recharge désigne une opération de recharge de la batterie entre l'instant de branchement et l'instant de débranchement, c'est-à-dire entre le niveau de charge initial et le niveau de charge cible final de la session. Une même session de recharge peut comporter une ou plusieurs phases discontinues de charge électrique. Dans la présente description, le terme environ signifie +/-10% de la valeur indiquée et les bornes d'une plage de valeurs sont comprises dans la plage.

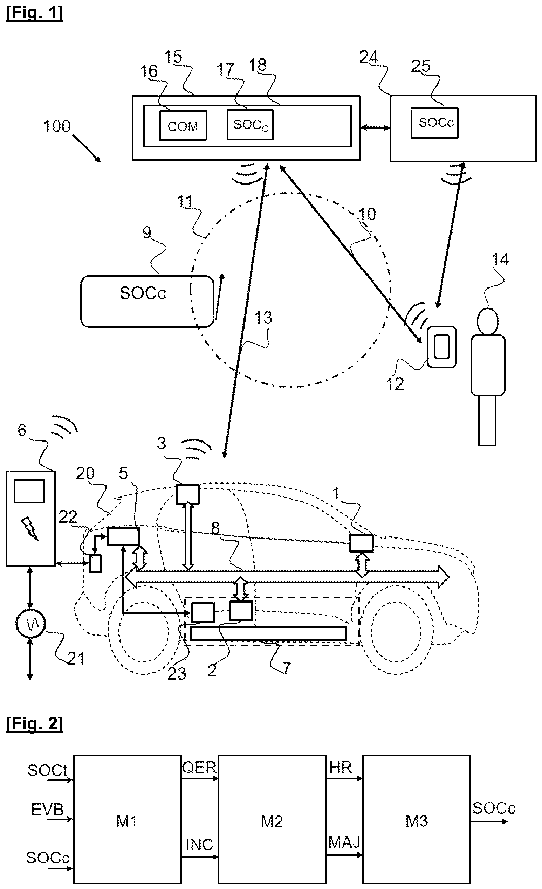

La figure 1 décrit un mode de réalisation préférentiel dans lequel un véhicule électrifié 20, prévu pour mettre en œuvre le procédé de gestion d'une session de recharge électrique selon l'invention, est connecté à un système de supervision 100. On envisage toutefois que le véhicule ne soit pas obligatoirement connecté à un tel système pour la mise en œuvre du procédé. En effet, alternativement le procédé est opérable dans un mode entièrement embarqué et permet le paramétrage de la recharge ou la délivrance à l'utilisateur d'une information concernant le paramétrage du niveau de charge cible pour une charge électrique. Ce niveau de charge cible est optimal dans le sens où il est estimé de manière personnalisée, en fonction de l'usage qui est fait du véhicule et des habitudes de recharge de l'utilisateur.

Le système 100 comporte au moins une borne de recharge électrique 6 à partir d'un réseau d'alimentation électrique 21, de courant alternatif, un équipement de supervision distante 15 communiquant des données avec un véhicule connecté à travers un réseau étendu de communication sans fil 11, par exemple un réseau de téléphonie cellulaire de type « 3G », « 4G » ou « 5G ». Un tel réseau est adapté pour la communication de données entre équipements connectés distants avec une portée de plusieurs centaines de kilomètres et permet la transmission de données par protocole IP.

Le véhicule 20 est équipé d'un système de batterie de puissance comprenant une batterie électrique de haute tension 7, généralement de plusieurs centaines de volts, assurant la fourniture d'énergie électrique à une machine électrique de traction du véhicule 20 (non représentée en figure 1). La batterie électrique 7 comprend des cellules électriques, par exemple de type Lithium-ion. Le système de batterie comprend également un calculateur 2 de gestion du système de batterie (désigné par l'acronyme BMS pour « Battery Management System » ou TBCU pour « Traction Battery Control Unit ») adapté pour superviser les paramètres spécifiques à la batterie 7 en coopération avec des capteurs de courant et tension, tels l'état de charge SOC (« State of Charge ») qui désigne le niveau d'état de charge de la batterie exprimé par un rapport entre la quantité d'énergie stockée à un instant donné et la quantité d'énergie maximum stockable à un instant donné, la tension de circuit ouvert OCV (« Open Circuit Voltage ») exprimée en Volt, le courant de charge exprimé en Ampère, l'état de santé SOH (« State of Health), qui désigne le paramètre de niveau de vieillissement de la batterie exprimant un rapport entre la quantité d'électricité maximum stockable à un instant donné et la quantité d'électricité maximum stockable à l'état neuf de la batterie. Les paramètres SOH et SOC sont des rapports exprimés en pourcentage.

Le calculateur 2 du BMS est configuré notamment pour commander l'arrêt de la recharge électrique sur borne lorsque l'état de charge atteint un niveau d'état de charge maximum cible SOCc. Ce niveau cible est classiquement configuré à une valeur entre 80% et 100% de la capacité de charge disponible. Dans le cadre de l'invention, le niveau SOCc est déterminé en fonction de la quantité d'énergie rechargée à chaque session de recharge. Il s'agit d'un niveau cible, appelé également niveau de limitation de la recharge.

Le véhicule 20 comprend en outre un dispositif de recharge 5 et une prise de courant 22 permettant de connecter le véhicule à une borne de recharge 6. Des connecteurs de commutation 23 assurent la déconnexion/connexion de la batterie 7 avec le circuit électrique de puissance du véhicule et avec le dispositif de recharge 5. Ce dernier a également pour fonction de gérer la communication entre les différentes bornes de recharge, de surveiller et contrôler la recharge électrique sur borne. Le dispositif de recharge 5 comporte également un convertisseur électrique de type alternatif/continu AC/DC et continu/continu DC/DC. Dans les situations de recharge sur borne, il réalise la conversion d'une tension alternative vers une tension continue AC/DC, notamment lors de recharge en mode 2 ou mode 3 dans lesquels il est nécessaire de convertir une tension alternative en 220V (de type monophasique ou triphasique) vers une tension continue compatible du système de batterie, jusqu'à 450V ou 1000V par exemple. En situation de roulage, une autre fonction est la conversion DC/DC entre la batterie et les systèmes embarqués du véhicule, par exemple le réseau de bord en 14V, la batterie basse tension et la machine électrique de traction du groupe motopropulseur. Selon le mode de recharge, le dispositif de recharge 5 pilote une consigne de recharge, par exemple une tension de charge et un courant de charge compatible de la batterie. Pour les modes 2 et 3, le dispositif de recharge réalise la conversion de tension AC/DC et pilote le courant de recharge pour respecter en permanence la consigne de recharge.

Dans le cadre des recharges dites rapides ou de mode 4, la tension de recharge est délivrée directement par la borne 6, c'est-à-dire sans modification de la tension par le convertisseur de tension. La tension délivrée par la borne 6 est de type continu, généralement supérieure à 300V, dans cet exemple comprise entre 400V et 500V, et est directement appliquée aux bornes de la batterie 7. Pour ce type de charge, le dispositif de recharge 5 délivre à la borne 6 la consigne de recharge calculée par le dispositif de contrôle 2 du système de batterie 7.

La borne de recharge électrique 6 peut être une prise conventionnelle domestique sur laquelle se branche le câble de recharge du véhicule, telle une prise électrique privée, ou être une borne de recharge personnelle, appartenant à l'utilisateur et disposée à son domicile ou à un stationnement privé. Dans ce cas d'exemple, la prise n'est pas prévue pour coopérer avec un système tiers opéré par un fournisseur de recharge électrique. Alternativement la borne de recharge 6 peut être une borne connectée à un système tiers opéré par un fournisseur de recharge supervisant un parc de bornes de recharge. La borne est alors adaptée pour transmettre des données à travers le système de supervision du fournisseur, notamment pour la gestion d'une session de recharge.

Pour communiquer avec le réseau étendu de communication 11, le véhicule 20 comporte en outre des moyens de communications sans fil 3, désigné également par les acronymes BTA (Boitier Télématique Automatique) et BSRF (Boitier de Servitude Radio Fréquence), comprenant notamment un dispositif à antenne, un boitier télématique, par exemple à carte SIM ( pour « Subscriber Identity Module »), permettant d'identifier et d'authentifier le véhicule auprès d'un fournisseur de service à travers le réseau de communication 11 afin d'autoriser la communication de données entre l'équipement de supervision distante 15 et le véhicule 20.

Le véhicule comporte en outre un calculateur principal 1, désigné également par le terme unité de commande principale, ou les acronymes VSM (Vehicule System Management), et VCU (Vehicule Control Unit) ayant pour fonction de centraliser les fonctions et les communications de données avec les calculateurs secondaires du véhicule, tels le calculateur 2 du BMS, le calculateur du dispositif de recharge 5, ou bien encore le boitier télématique 3. Le calculateur principal et les calculateurs secondaires coopèrent à travers un réseau de communication de donnée embarqué filaire 8, par exemple de type CAN. L'ensemble des calculateurs sont alimentés par des circuits d'alimentation (non représentés) pilotés par des commutateurs de puissance, ou relais électriques.

Selon ce mode de réalisation préférentiel, l'unité de commande principale 1 supervise la gestion énergétique du véhicule. En particulier, dans le cadre de l'invention, elle opère le procédé de gestion d'une session de recharge permettant de déterminer un niveau d'état de charge cible SOCc en fin de recharge en fonction de l'usage du véhicule et des habitudes de recharge, notamment les distances parcourues et la fréquence de recharge.

Le véhicule peut comprendre un calculateur secondaire 4 dédié à la fourniture de données de navigation et de média à bord du véhicule, couramment désigné par le terme calculateur « infotainment » ou infodivertissement. Il communique avec les autres calculateurs du véhicule à travers le réseau 8 CAN. Dans le cadre de l'invention, le calculateur 4 peut par exemple présenter au conducteur à travers une interface IHM (pour Interface Homme Machine) le niveau d'état de charge cible SOCc de limitation de la session de recharge, lequel étant calculé selon le procédé de gestion de l'invention. Classiquement, il coopère avec une unité de visualisation ou unité multimédia à bord du véhicule pour transmettre des données relatives à du média et de la navigation de bord. De cette manière, le conducteur a la possibilité de paramétrer lui-même le niveau de limitation de la recharge ou de modifier la valeur paramétrée automatiquement selon l'invention.

L'équipement de supervision distante 15 comprend un système logiciel 18 de supervision distante de véhicules connectés opérant un service de connectivité et de traitement de données d'un parc de véhicules connectés (souvent désigné par « Cloud Service », service en ligne ou service dans les nuages) adapté pour communiquer avec le véhicule 20 via le réseau de communication sans fil 11. A cet effet, il comprend en outre des moyens de communications sans fil (non représenté) permettant d'établir un canal de communication de données depuis et vers l'équipement de supervision. Le service de connectivité est par exemple opéré par le constructeur du véhicule électrifié 20. Le système logiciel 18 se base sur un ou plusieurs serveurs distants de l'équipement 15. Un serveur comprend un processeur et un dispositif de stockage de données et des dispositifs matériels conventionnels tels des interfaces réseau et autres modules logiciels d'interface. Le processeur comprend une ou plusieurs unités de traitement de données et des mémoires volatiles et non-volatiles pour l'exécution de programmes informatiques.

Le module logiciel 18 comprend un module de communication 16 adapté pour établir un canal de communication 13 de données 9 entre le véhicule 20 et l'équipement de supervision 15 à travers le réseau de communication sans fil 11. Les données communiquées 9 provenant du véhicule 20 contiennent par exemple le niveau d'état de charge cible optimal SOCc calculé selon le procédé de gestion de l'invention.

En outre, le module de communication 16 est adapté pour établir un canal de communication 10 de données entre un dispositif électronique personnel 12 d'un utilisateur 14 et l'équipement de supervision 15 à travers le réseau de communication sans fil 11, pour recevoir des requêtes utilisateur et transmettre des données directement à l'utilisateur 14, notamment le niveau d'état de charge cible optimal SOCc calculé selon le procédé de gestion de l'invention. Le dispositif personnel 12 est un téléphone portable, tablette, montre connectée ou ordinateur par exemple. Le dispositif personnel 12 est adapté pour opérer une application du constructeur du véhicule pour des services distants propriétaires du constructeur.

Enfin, le système 100 est prévu pour coopérer avec un système tiers 24 d'un fournisseur de service. L'équipement distant 15 et le système tiers 24 coopèrent en communication de données pour l'échange de données, notamment la valeur du SOCc et comprend un moyen d'enregistrement du SOCc à tout instant, ainsi qu'un système logiciel 25 adapté à opérer un service distant exploitant le niveau d'état de charge cible SOCc. Le système tiers 24 se base sur un ou plusieurs serveurs distants et bases de données. Un serveur comprend un processeur et un dispositif de stockage de données et des dispositifs matériels conventionnels tels des interfaces réseau et autres modules logiciels d'interface. Le processeur comprend une ou plusieurs unités de traitement de données et des mémoires volatiles et non-volatiles pour l'exécution de programmes informatiques.

Le fournisseur de service 24 peut être un opérateur de bornes de recharge (la borne de recharge 6 par exemple) permettant la gestion de recharge intelligente à distance ou un opérateur de gestion énergétique d'un réseau d'alimentation électrique (EMS pour « Energy Management System ») opérant des services de gestion intelligente du réseau d'alimentation électrique, un serveur dudit opérateur hébergeant un module logiciel de gestion énergétique dudit réseau d'alimentation électrique. Alternativement le fournisseur de service peut être un opérateur d'une flotte de véhicule ou un fournisseur de services à l'utilisateur 14, par exemple un service reposant sur une application pour l'usage de son véhicule, une application de navigation, une application de gestion de données et d'appareils connectés du domicile, tels la borne de recharge 6 domestique, un compteur électrique, etc. Le système tiers 24 peut communiquer avec un ou des appareils connectés à travers le réseau de communication sans fil ou un réseau IP filaire ou par réseau de fibre optique ou satellite, c'est à dire via un fournisseur de service internet qui n'est pas nécessairement un réseau de téléphonie mobile.

Le procédé selon l'invention est exécuté, par exemple selon un mode de réalisation préférentiel, par l'unité de commande principale 1 de supervision énergétique, ou par l'unité de commande 2 du système de batterie 7, ou bien encore par un module distant connecté à travers le réseau 11. L'unité de commande 1 est munie d'un calculateur à circuits intégrés et de mémoires électroniques, le calculateur et les mémoires étant configurés pour exécuter le procédé de gestion selon l'invention. Mais cela n'est pas obligatoire. En effet, le calculateur pourrait être externe à l'unité de commande 1, tout en étant couplé à cette dernière 1. Dans ce dernier cas, il peut être lui-même agencé sous la forme d'un calculateur dédié comprenant un éventuel programme dédié, par exemple. Par conséquent, l'unité de commande, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

On décrit en figure 2 les modules de la fonction de calcul du niveau d'état de charge cible d'une session de recharge configurés pour mettre en œuvre le procédé selon l'invention.

Un premier module M1 est prévu pour détecter l'évènement de branchement du véhicule EVB à la borne de recharge, grâce à une information délivrée par le dispositif de recharge 5 ou le dispositif de contrôle 2 de la batterie 7. Le module M1 est prévu en outre pour collecter la valeur de l'état de charge instantané SOCt de la batterie 7, notamment à l'instant de branchement pour une session de recharge, et pour calculer une quantité d'énergie rechargée QER lors d'une session de recharge, par exemple en calculant l'écart entre l'état de charge au début de la charge SOCt et l'état de charge cible SOCc. A cet effet, le module M1 reçoit en entrée la dernière valeur du niveau d'état de charge cible SOCc configurée selon l'invention. En variante, on envisage que la quantité d'énergie rechargée puisse être calculée en mesurant l'écart entre l'état de charge à l'instant de début de la charge et l'état de charge à l'instant de fin de charge. Le module M1 est apte à recevoir d'autres paramètres et informations du véhicule et de la borne de recharge.

En outre, le module M1 délivre la valeur de la quantité d'énergie QER à un deuxième module M2 dont la fonction est d'enregistrer un historique de recharge relevant les quantités d'énergie rechargée de chaque session de charge. Le module M1 délivre une commande d'incrémentation INC des occurrences de chaque valeur QER.

Le module M2 est prévu pour enregistrer l'historique de recharge en collectant les quantités d'énergie rechargée de chaque session de charge pour une période donnée. Selon un mode de réalisation préférentiel, l'historique est enregistré sous la forme d'une table à une dimension enregistrant le nombre d'occurrences de charge pour un index de valeurs de quantité d'énergie rechargée QER, exprimée en % de SOC entre 0% et 100%. Le pas de l'index des quantités d'énergie peut être de 5% ou de 10% par exemple. Le module M2 incrémente le nombre d'occurrences de l'index à chaque session de recharge. Le module M2 délivre l'historique de recharge HR et une commande de mise à jour MAJ de la valeur du niveau d'état de charge cible SOCc à un troisième module M3. La commande de mise à jour MAJ active le calcul d'une nouvelle valeur du niveau d'état de charge SOCc à chaque série d'une pluralité de n sessions de recharge, par exemple n est compris entre 1 et 30, peut être égal à 10, 20, 30 par exemple, n étant un entier positif. La valeur du nombre de sessions de recharge n'est aucunement limitative de l'invention. Un objectif de l'invention est de mettre à jour la valeur du niveau de charge cible SOCc deux à trois fois mensuellement environ.

Le module M3 est prévu pour déterminer une fonction de distribution cumulative de l'historique de recharge HR. La fonction de distribution cumulative ou de probabilité cumulative de l'historique de recharge est un modèle représentatif de la probabilité cumulative d'une quantité d'énergie rechargée à chaque recharge. Le modèle est calculé à partir de l'historique de recharge HR délivré par le module M2. Le modèle est une table à deux variables dans laquelle une première variable représente une quantité d'énergie rechargée en % de la capacité totale disponible de la batterie, comprise entre 0% et 100% et dans laquelle une deuxième variable représente une probabilité de valeur comprise entre 0 et 1 pour chaque valeur de quantité d'énergie comprise entre 0 et 100%.

De préférence, le module M3 est configuré pour obtenir le modèle par un calcul d'interpolation des valeurs discrètes de l'historique de recharge HR. Pour chaque valeur de quantité d'énergie, une probabilité est calculée par calcul de la somme des occurrences de recharge pour chaque valeur de quantité d'énergie divisée par le nombre d'occurrences totales. A partir du modèle de distribution cumulative de l'historique de recharge HR, le module M3 est configuré pour estimer des valeurs de besoins d'énergie, en % de SOC, suffisantes pour couvrir des probabilités voulues des besoins de l'utilisateur. A partir d'une ou de plusieurs valeurs de besoins d'énergie, une fonction de calcul détermine le niveau d'état de charge cible SOCc à configurer lors d'une session de recharge.

Selon une stratégie énergétique préférentielle, la fonction de calcul détermine deux besoins de recharge. Un premier besoin est configuré pour couvrir 50% des besoins entre chaque recharge correspondant au besoin journalier. A ce besoin, on additionne une quantité d'urgence pour les roulages exceptionnels, par exemple le week-end. A titre d'exemple non limitatif, la quantité d'urgence couvre 100km de roulage, équivalent à 30% de la capacité totale disponible de la batterie. Un deuxième besoin est configuré pour couvrir 95% des besoins entre chaque recharge. Selon cette stratégie énergétique, on sélectionne la quantité d'énergie maximum entre ces besoins. Cette quantité maximum est représentative de l'usage de l'utilisateur et vise à répondre aux besoins journaliers ainsi qu'aux besoins ponctuels de l'utilisateur de plus grande distance.

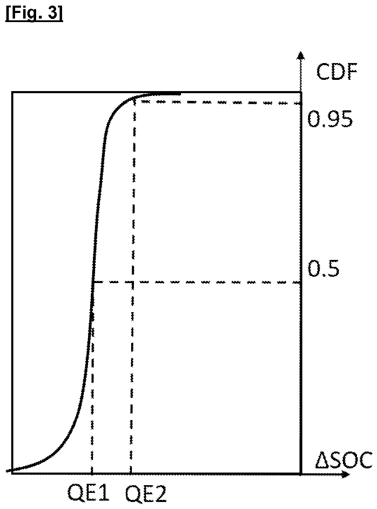

La figure 3 illustre une fonction de distribution cumulative CDF permettant de déterminer les quantités d'énergie recherchées. L'axe des abscisses représente la quantité d'énergie ΔSOC associée à une probabilité de la fonction CDF. L'axe des ordonnées représente la probabilité CDF des besoins couverts entre chaque recharge. La fonction de calcul est alors apte à déterminer une première quantité d'énergie QE1 couvrant la première probabilité de 0,5 de la fonction de distribution CDF, une deuxième quantité d'énergie QE2 couvrant la deuxième probabilité de 0,95 de la fonction de distribution. La fonction de calcul est apte à sélectionner la valeur maximum entre d'une part la première quantité QE1 additionnée de la quantité d'urgence QE3 et, d'autre part la deuxième quantité QE2. La valeur maximum choisie détermine la valeur du besoin d'énergie correspondant du niveau d'état de charge cible SOCc. Optionnellement, on ajoute à la valeur maximum sélectionnée une quatrième quantité d'énergie QE4 correspondant à un besoin d'énergie de réserve, par exemple 10% de la capacité totale disponible de la batterie.

On envisage des stratégies énergétiques alternatives sans sortir du cadre de l'invention. Par exemple, le niveau de charge cible SOCc peut être calculé à partir d'une unique probabilité choisie de la fonction CDF. En outre, QE3 et QE4 sont des valeurs prédéterminées enregistrées en mémoire du dispositif de gestion et sont paramétrables par l'utilisateur.

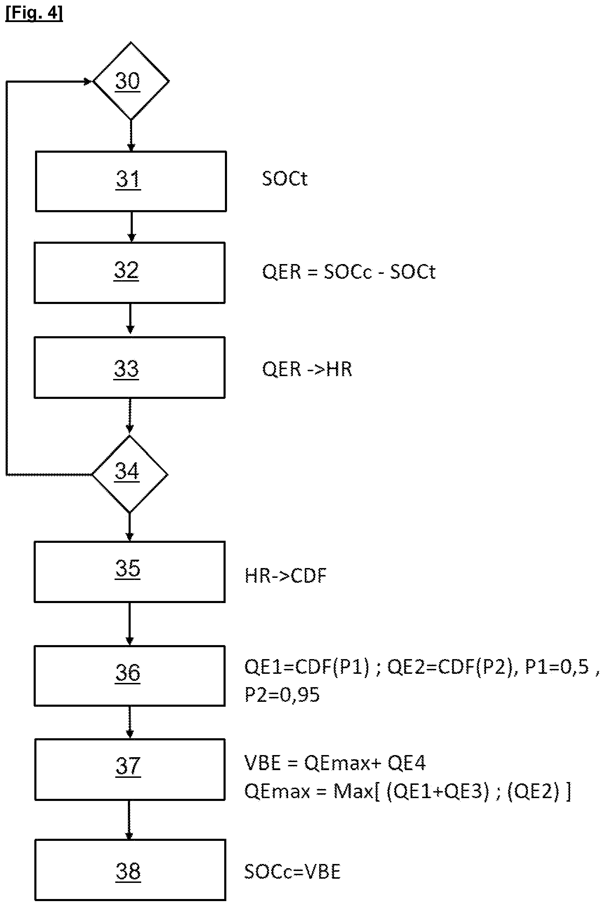

La figure 4 est un logigramme représentant un mode de réalisation du procédé selon l'invention. Le procédé de gestion s'exécute à chaque session de recharge pour estimer une quantité d'énergie rechargée et détermine une valeur de niveau d'état de charge cible SOCc. Ce niveau cible SOCc est mis à jour périodiquement en fonction de la fréquence des recharges, par exemple toutes les vingt sessions de recharges, ou au moins une ou deux fois mensuellement.

A une première étape 30, le procédé comporte la détection d'un branchement du véhicule à une borne de recharge. Cet événement est détecté par l'unité de commande principale du véhicule, le dispositif de recharge embarqué ou bien encore le système de batterie.

Ensuite, à une deuxième étape 31, le procédé comporte la détermination du niveau d'état de charge instantané de la batterie SOCt, ce niveau correspondant au niveau initial de début de la session de recharge. Cette information SOCt est délivrée par le système de batterie du véhicule.

Ensuite, à une troisième étape 32, le procédé comporte le calcul d'une quantité d'énergie rechargée QER. Dans ce mode de réalisation, la quantité d'énergie rechargée QER est obtenue par le calcul de l'écart entre l'état de charge instantané SOCt et le niveau d'état de charge cible SOCc de la session de recharge. Le niveau SOCc correspond à la valeur établie lors de la dernière mise à jour du niveau de recharge cible SOCc. Pour la première session, il s'agit d'une valeur paramétrée par défaut, par exemple 100% du SOC, ou 80% du SOC. Ce mode de réalisation de calcul est avantageux dans le sens qu'il permet d'estimer une quantité d'énergie rechargée à l'instant de branchement, lorsque les calculateurs du véhicule sont allumés et en état de réveil. Il n'est donc pas nécessaire de collecter le niveau de fin de charge à l'instant de fin de recharge. Dans certaine architecture de véhicule, cette information n'est pas disponible.

En variante, on envisage que la quantité d'énergie rechargée QER puisse être calculée en fonction du niveau de charge de début de la session et du niveau de charge de fin de la session.

Ensuite, à une troisième étape 33, le procédé comporte l'enregistrement d'un historique de recharge HR à partir de la quantité d'énergie rechargée QER. Dans ce mode de réalisation, l'historique de recharge est une table indexant des valeurs d'état de charge SOC de la batterie, entre 0% et 100% de SOC, avec un pas de SOC de 5% ou de 10% par exemple. Pour chaque valeur de SOC définie par l'index, la table enregistre le nombre d'occurrences de sessions de recharge. La table est incrémentée d'une valeur +1 pour la valeur de SOC correspondant à la quantité d'énergie rechargée QER à chaque session de recharge.

Ensuite, à une quatrième étape 34, le procédé comporte la vérification de la condition de mise à jour de la valeur du niveau d'état de charge cible SOCc. La mise à jour est déclenchée dans cet exemple non limitatif à chaque série de n sessions de recharge, n étant un entier compris de préférence entre 1 et 30. D'autres conditions de déclenchement sont envisageables, par exemple par détection de l'écoulement d'une période temporelle, tous les 15 jours ou mensuellement. Une autre condition de mise à jour peut être une requête de l'utilisateur communiquée via l'IHM. Si la condition de mise à jour n'est pas détectée, alors le procédé retourne à l'étape 30.

Lorsque la condition de mise à jour est détectée, le procédé étant configuré pour détecter dans ce mode de réalisation une série de n sessions de recharge successives, vingt dans cet exemple, alors le procédé comporte une phase consistant à déterminer une valeur d'état de charge cible SOCc à partir de l'historique de recharge HR.

Plus précisément, le procédé comporte une cinquième étape 35 de modélisation de la fonction de distribution cumulative CDF de l'historique de recharge HR à partir des valeurs enregistrées dans la table. La fonction CDF est calculée par le module M3, décrit précédemment, et conformément à la figure 3. Il s'agit d'une table à deux variables indiquant des valeurs de quantité d'énergie rechargée associées à une valeur de probabilité comprise entre 0 et 1.

Le procédé comporte une sixième étape 36 de détermination d'une première quantité d'énergie QE1 couvrant une première probabilité P1 de la fonction de distribution CDF. Dans cet exemple, P1 est égal à 0,5. En outre, le procédé comporte la détermination d'une deuxième quantité d'énergie QE2 couvrant une deuxième probabilité P2 de la fonction de distribution CDF, où P2 est supérieure P1, de préférence égale à 0,95. P1 et P2 sont paramétrables à des valeurs différentes, choisies en fonction de la stratégie d'estimation des besoins de roulage pour piloter une session de recharge.

Ensuite, le procédé comporte l'étape de détermination 37 de la valeur du besoin d'énergie VBE à partir de la fonction de distribution CDF. Dans ce mode de réalisation, le procédé réalise la sélection de la valeur maximum QEmax entre d'une part la première quantité QE1 additionnée de la troisième quantité prédéterminée QE3 d'urgence et, d'autre part la deuxième quantité QE2. Selon le profil de l'utilisation, la valeur maximum QEmax est égale à la relation suivante QEmax= QE1+QE3, ou QEmax=QE2.

Préférentiellement, afin de garantir un niveau de réserve, la valeur du besoin d'énergie VBE est égale à la valeur maximum QEmax additionnée de la quatrième quantité d'énergie prédéterminée QE4, c'est-à-dire VBE= QEmax+QE4.

QE3 et QE4 sont des valeurs prédéterminées enregistrées en mémoire du dispositif de gestion et sont paramétrables par l'utilisateur.

Enfin, le procédé comporte une étape 38 de configuration du niveau d'état de charge cible SOCc à ladite valeur du besoin d'énergie VBE. Le niveau SOCc est configuré automatiquement dans la fonction de gestion de la recharge pour commander l'arrêt d'une session de recharge lorsque le niveau d'état de charge atteint le niveau SOCc. Il s'agit de la fonction exécutée par le système de batterie du véhicule. Le niveau SOCc peut être affiché via le système d'IHM du véhicule à travers la fonction de gestion de la recharge. Dans un mode alternatif, le niveau SOCc n'est pas configuré automatiquement mais seulement affiché sous forme de configuration de recommandation. Optionnellement, le niveau SOC est transmis au système distant auquel est connecté le véhicule à travers un serveur de gestion du véhicule. Le système distant est en possibilité de communiquer le niveau SOCc calculé selon le procédé à un utilisateur à travers son dispositif personnel et une application de gestion de la recharge.

Les étapes 35 à 38 du procédé sont réalisées selon une fréquence choisie dépendante de la condition de mise à jour 34. Le procédé prévoit en outre une évaluation continuelle du niveau cible de recharge par rapport à l'usage antérieure. Cette évaluation vise à détecter un changement des habitudes de l'utilisateur pour réinitialiser la valeur SOCc.

Selon cette fonction d'évaluation, il est prévu qu'à chaque cycle de mise à jour, le procédé mémorise temporairement la dernière série HRₙ de l'historique de recharge ou, alternativement, la dernière valeur SOCcₙ du niveau d'état de charge cible SOCcₙ calculée pour la série associée, afin de procéder à l'évaluation lors la mise à jour suivante avec la série suivante HRₙ₊₁ de l'historique de recharge, ou avec le niveau SOCcₙ₊₁ associé.

Puis, lors de la mise à jour suivante, le procédé comporte une étape de comparaison des valeurs SOCcₙ et SOCcₙ₊₁ de chaque série. Lorsque l'écart est supérieur à un seuil prédéterminé, le procédé enregistre la dernière série uniquement dans l'historique de recharge HR, mettant en œuvre la réinitialisation de l'historique de recharge. Lorsque l'écart est inférieur audit seuil, le procédé ajoute la deuxième série à l'historique de recharge.

Enfin, lorsqu'une session de recharge est opérative, indépendamment du processus de mise à jour du niveau de recharge cible SOCc, le procédé de gestion selon l'invention pilote la recharge électrique de la batterie du véhicule et, en outre, pilote la commande de l'arrêt de la recharge lorsque l'état de charge instantané atteint le niveau d'état de charge cible SOCc enregistré par le système de batterie.

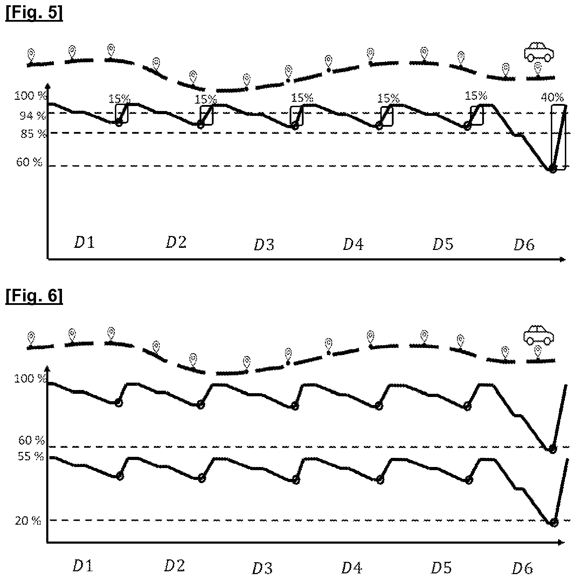

En figure 5, on décrit un exemple d'usage d'un véhicule électrifié dans lequel l'utilisateur recharge de manière journalière la batterie du véhicule. L'invention est particulièrement adaptée pour ce type d'usage et permet de limiter le niveau de charge cible et ainsi prolonger la durée de vie de sa batterie. En ordonnée, on a représenté le niveau d'état de charge de la batterie du véhicule, en pourcentage de la capacité de la batterie. En abscisse, on a représenté un axe temporel sur un durée d'une semaine. Ce profil d'utilisateur parcourt environ une cinquantaine de kilomètres quotidiennement (D1, D2, D3, D4, D5, D6) et recharge environ 15% de la capacité de la batterie à chaque recharge. On a représenté par un cercle les évènements de recharge. En fin de semaine, ponctuellement il parcourt un trajet plus long requérant une recharge de 40%. Sans application du procédé selon l'invention, le niveau de charge cible à chaque session est configuré à 100% et varie chaque jour entre 100% et 85%, sauf en fin de semaine où le niveau peut atteindre 60%. Dans ces hypothèses, le niveau de charge moyen de la batterie est d'environ 94%.

En figure 6, on décrit le même exemple d'usage pour lequel le procédé de gestion de la recharge selon l'invention est activé. Le niveau d'état de charge cible SOCc calculé selon le procédé limite la recharge à 55% pour ce cas d'usage. Plus précisément, l'historique de recharge HR et la distribution cumulative CDF pour ce type d'utilisateur, fournissent pour un besoin d'énergie QE1 de 15% pour couvrir au moins 50% des usages de l'utilisateur, et un besoin d'énergie de QE2 de 40% pour couvrir au moins 95% des usages de l'utilisateur. QEmax est égal au maximum entre QE1+30% et entre QE2, soit QEmax= 45%. La valeur du besoin en énergie VBE, calculée selon le procédé avec une réserve de 10%, donne VBE =QEmax+QE4=45%+10%=55%.

Sur le graphique, la courbe supérieure représente une gestion de la recharge sans activation de la limitation du niveau cible SOCc et la courbe inférieure représente l'activation du procédé permettant de limiter le niveau cible SOCc, à 55% dans cet exemple, en accord avec l'usage de l'utilisateur et la fréquence de recharge du véhicule. On obtient une réduction de l'état de charge moyen de la batterie permettant de prolonger la durée de vie des cellules électrochimiques.

On envisage un mode de réalisation simplifié du procédé de gestion de la recharge dans lequel le procédé comporte l'enregistrement d'une quantité d'énergie rechargée lors d'une session de recharge. Il peut s'agir de la quantité d'énergie de la dernière recharge, par exemple, ou d'une session de recharge choisie par l'utilisateur, par exemple une des sessions parmi un historique de recharge enregistré, le cas échéant. La quantité d'énergie rechargée est calculée identiquement à l'étape 32 du mode de réalisation décrit en figure 4.

Le procédé comporte en outre la configuration du niveau d'état de charge cible en fonction de la quantité d'énergie rechargée qui a été enregistrée. La configuration, ou la mise à jour de la valeur du niveau SOCc, peut être conditionnée à un écoulement d'une durée, un nombre de sessions de recharge ou à une requête de l'utilisateur par exemple. Plus précisément, un besoin d'énergie peut être calculé à partir de la quantité enregistrée et d'un besoin d'urgence couvrant une distance minimum voulue. Ladite quantité enregistrée et le besoin sont additionnés pour déterminer le niveau de charge cible SOCc. La configuration du niveau d'état de charge cible SOCc prévoit la configuration de la fonction d'arrêt de la recharge à ce niveau cible SOCc. Ce mode de gestion du niveau d'état de charge cible peut être exécuté automatiquement ou manuellement par l'utilisateur. Ce mode de réalisation évite le recours au calcul d'une distribution cumulative de l'historique de recharge. L'enregistrement d'un historique de recharge n'est pas obligatoire. La dernière quantité rechargée peut être suffisante pour la mise en œuvre de ce mode de réalisation. Lors d'une session de recharge, la recharge est arrêtée lorsque le niveau de charge atteint le niveau cible.

## Revendications

1. Procédé de gestion d'une session de recharge d'une batterie de traction (7) pour un véhicule automobile électrifié (20) comportant la détermination d'un niveau d'état de charge cible commandant l'arrêt de la session de recharge, comportant les étapes suivantes :
- L'enregistrement (33) d'une quantité d'énergie rechargée (QER) lors d'une session de recharge,
- La configuration (38) du niveau d'état de charge cible (SOCc) en fonction de ladite quantité d'énergie rechargée (QER),
**caractérisé en ce qu'**il comprend en outre les étapes suivantes :
- L'enregistrement (33) d'un historique de recharge (HR) à partir de la quantité d'énergie rechargée (QER) à chaque session de recharge,
- La détermination (35) d'une fonction de distribution cumulative (CDF) de l'historique de recharge (HR),
- La détermination (37) d'au moins une valeur d'un besoin d'énergie (VBE) à partir de la fonction de distribution (CDF),
- La configuration du niveau d'état de charge cible (SOCc) à ladite valeur du besoin d'énergie (VBE),
la fonction de distribution (CDF) étant une fonction de probabilité cumulative modélisant la probabilité cumulative d'une quantité d'énergie rechargée (QER) à partir de l'historique de recharge, la détermination de la valeur du besoin d'énergie (VBE) comportant :
- La détermination (36) d'une première quantité d'énergie (QE1) couvrant une première probabilité (P1) de la fonction de distribution (CDF),
- La détermination (36) d'une deuxième quantité d'énergie (QE2) couvrant une deuxième probabilité (P2) de la fonction de distribution (CDF) supérieure à la première probabilité (P1),
- La sélection (37) de la valeur maximum entre d'une part la première quantité (QE1) additionnée d'une troisième quantité prédéterminée (QE3) et, d'autre part la deuxième quantité (QE2).

2. Procédé selon la revendication 1, **caractérisé en ce que** la valeur du besoin d'énergie (VBE) est égale à la valeur maximum (QEmax) additionnée d'une quatrième quantité d'énergie prédéterminée (QE4).

3. Procédé selon la revendication 1 ou 2, **caractérisé en ce que** le niveau d'état de charge cible (SOCc) est mis à jour à chaque série de n sessions de recharge successives, où n étant un entier positif.

4. Procédé selon la revendication 3, **caractérisé en ce qu'**il comporte en outre à chaque mise à jour du niveau d'état de charge cible (SOCc), la détermination d'une première et d'une deuxième valeur du niveau d'état de charge cible (SOCcₙ, SOCCₙ₊₁) pour une première série (HRₙ) et une deuxième série (HRₙ₊₁) respectivement, la comparaison de la première et deuxième valeur (SOCcₙ, SOCcₙ₊₁), et lorsque l'écart est supérieur à un seuil prédéterminé, la réinitialisation de l'historique de recharge (HR) par la deuxième série, lorsque l'écart est inférieur audit seuil, l'ajout de la deuxième série à l'historique de recharge (HR).

5. Procédé selon la revendication 1, **caractérisé en ce que** le procédé comporte en outre les étapes suivantes pour l'enregistrement de la quantité d'énergie rechargée (QER) :
- Lorsqu'on détecte le branchement du véhicule (30) à une borne de recharge (6), l'acquisition (31) de l'état de charge instantané (SOCt) de la batterie (7),
- Le calcul (32) de l'écart de charge (QER) entre l'état de charge instantané (SOCt) et le niveau d'état de charge cible (SOCc) de la session de recharge,
l'enregistrement (33) de l'historique de recharge (HR) consistant à enregistrer le nombre d'occurrences de chaque valeur d'écart de charge (QER) dans une table de recharge.

6. Procédé selon la revendication 5, **caractérisé en ce que** la valeur du besoin d'énergie (VBE) est égale à la valeur maximum (QEmax) additionnée d'une quatrième quantité d'énergie prédéterminée (QE4).

7. Procédé selon la revendication 5 ou 6, **caractérisé en ce que** le niveau d'état de charge cible (SOCc) est mis à jour à chaque série de n sessions de recharge successives, où n étant un entier positif.

8. Procédé selon la revendication 7, **caractérisé en ce qu'**il comporte en outre à chaque mise à jour du niveau d'état de charge cible (SOCc), la détermination d'une première et d'une deuxième valeur du niveau d'état de charge cible (SOCcₙ, SOCcₙ₊₁) pour une première série (HRₙ) et une deuxième série (HRₙ₊₁) respectivement, la comparaison de la première et deuxième valeur (SOCcₙ, SOCcₙ₊₁), et lorsque l'écart est supérieur à un seuil prédéterminé, la réinitialisation de l'historique de recharge (HR) par la deuxième série, lorsque l'écart est inférieur audit seuil, l'ajout de la deuxième série à l'historique de recharge (HR).

9. Procédé selon l'une quelconque des revendications 1 à 8, **caractérisé en ce qu'**il comporte en outre l'opération d'une recharge électrique de la batterie (7) du véhicule (20) et la commande de l'arrêt de la recharge lorsque l'état de charge instantané (SOCt) atteint le niveau d'état de charge cible (SOCc).

10. Véhicule automobile électrifié (20) comportant un système de batterie de traction (7) et un dispositif (1) de gestion d'une session de recharge du système de batterie (7), **caractérisé en ce que** ledit dispositif (1) est configuré pour mettre en œuvre le procédé de gestion d'une session de recharge selon l'une quelconque des revendications 1 à 9.

## Patentansprüche

1. Verfahren zum Verwalten eines Aufladevorgangs einer Traktionsbatterie (7) für ein Elektrofahrzeug (20), umfassend die Bestimmung eines Zielladezustands, der das Beenden des Aufladevorgangs steuert, umfassend die folgenden Schritte aus :
- Aufzeichnen (33) einer Menge an nachgeladener Energie (QER) während einer Aufladesitzung,
- Die Konfiguration (38) des Zielladezustands ( SOCc ) als Funktion der Menge der nachgeladenen Energie (QER),
**dadurch gekennzeichnet , dass** es weiterhin die folgenden Schritte umfasst:
- Aufzeichnen (33) eines Aufladeverlaufs (HR) anhand der bei jedem Aufladevorgang aufgeladenen Energiemenge (QER),
- Bestimmung (35) einer kumulativen Verteilungsfunktion (CDF) der Aufladehistorie (HR),
- Die Bestimmung (37) von mindestens einem Wert eines Energiebedarfs (VBE) bei aus der Verteilungsfunktion (CDF),
- Einstellen des Zielladezustands ( SOCc ) auf den Wert des Energiebedarf ( VBE),
die kumulative Verteilungsfunktion (CDF) ist eine kumulative Wahrscheinlichkeitsfunktion
Modellieren der kumulierten Wahrscheinlichkeit einer nachgeladenen Energiemenge
(QER) aus der Nachladehistorie, wobei die Bestimmung des Wertes des Energiebedarfs (VBE) umfasst :
- Die Bestimmung (36) einer ersten Energiemenge (QE1), die eine erste Wahrscheinlichkeit (P1) der Verteilungsfunktion (CDF) abdeckt,
- Die Bestimmung (36) einer zweiten Energiemenge (QE2) über einen zweite Wahrscheinlichkeit (P2) der Verteilungsfunktion (CDF) größer als die erste Wahrscheinlichkeit (P1),
- Die Auswahl (37) des Maximalwertes zwischen der ersten Menge (QE1) addiert zu einer dritten vorgegebenen Menge (QE3) einerseits und der zweiten Menge (QE2) andererseits.

2. Verfahren nach Anspruch 1, **dadurch gekennzeichnet, dass** der Wert des Bedarfs Energie (VBE) ist gleich dem Maximalwert ( QEmax ) plus einer vierten vorgegebenen Energiemenge (QE4).

3. Verfahren nach Anspruch 1 oder 2, **dadurch gekennzeichnet, dass** der Zielladezustand ( SOCc ) bei jeder Serie von n aufeinanderfolgenden Ladesitzungen aktualisiert wird, wobei n eine positive ganze Zahl ist.

4. Verfahren nach Anspruch 3, **dadurch gekennzeichnet, dass** es weiterhin umfasst:
bei jeder Aktualisierung des Zielladezustands ( SOCc ), Bestimmen eines ersten und eines zweiten Werts des Zielladezustands ( SOCcn , SOCc ₙ₊₁ ) für eine erste Serie (H Rn) und einer zweiten Reihe (HR ₙ₊₁ ), der Vergleich des ersten und zweiten Wertes ( SOCc ₙ,
SOCc ₙ₊₁ ), und wenn die Abweichung größer als ein vorgegebener Schwellenwert ist, das
Zurücksetzen des Aufladeverlaufs ( HR) durch die zweite Serie, wenn die Lücke kleiner als der genannte Schwellenwert ist, die Hinzufügung der zweiten Serie zum Aufladeverlauf ( HR).

5. Verfahren nach Anspruch 1, **dadurch gekennzeichnet, dass** das Verfahren umfasst zusätzlich zu den folgenden Schritten zur Erfassung der nachgeladenen Energiemenge (QER) :
- Wenn die Verbindung des Fahrzeugs (30) mit einer Ladestation (6) erkannt wird, erfolgt die Erfassung (31) des momentanen Ladezustands ( SOCt ) der Batterie (7),
- Berechnung (32) der Ladungsabweichung (QER) zwischen dem momentanen Ladezustand
( SOCt ) und dem Zielladezustand ( SOCc ) des Ladevorgangs,
die Aufzeichnung (33) der Aufladehistorie (HR) besteht aus der Aufzeichnung der Anzahl der Vorkommen jedes Lastabweichungswerts (QER) in einer Aufladetabelle.

6. Verfahren nach Anspruch 5, **dadurch gekennzeichnet, dass** der Wert des Energiebedarfs (VBE) gleich dem Maximalwert ( QEmax ) plus einer vierten vorgegebenen Energiemenge (QE4) ist.

7. Verfahren nach Anspruch 5 oder 6, **dadurch gekennzeichnet, dass** die Zustandsebene von Zielladung ( SOCc ) wird bei jeder Serie von n aufeinanderfolgenden Ladevorgängen aktualisiert , wobei n eine positive Ganzzahl ist.

8. Verfahren nach Anspruch 7, **dadurch gekennzeichnet, dass** es ferner bei jeder Aktualisierung des Zielladezustandsniveaus ( SOCc ) die Bestimmung eines ersten und eines zweiten Werts des Zielladezustandsniveaus ( SOCc ₙ, SOCc ₙ₊₁ ) für eine erste Reihe ( HRn ) und eine zweite Reihe (HR ₙ₊₁ ) , Vergleichen des ersten und des zweiten Werts ( SOCc ₙ, SOCc ₙ₊₁ ), und wenn die Abweichung größer als ein vorgegebener Schwellenwert ist, Zurücksetzen des Aufladeverlaufs (HR) durch die zweite Reihe, und wenn die Abweichung kleiner als dieser Schwellenwert ist, Hinzufügen der zweiten Reihe zum Aufladeverlauf (HR).

9. Verfahren nach einem der Ansprüche 1 bis 8 , **dadurch gekennzeichnet, dass** es umfasst ferner den Vorgang eines elektrischen Aufladens der Batterie (7) des Fahrzeugs (20) und die Steuerung des Stoppens des Aufladens, wenn der momentane Ladezustand ( SOCt ) den Zielladezustandspegel ( SOCc ) erreicht.

10. Elektrifiziertes Kraftfahrzeug (20) mit einem Traktionsbatteriesystem (7) und eine Vorrichtung (1) zur Verwaltung eines Aufladevorgangs des Batteriesystems (7), **dadurch gekennzeichnet, dass** das Gerät (1) so konfiguriert ist, dass es das Verfahren zum Verwalten eines Ladevorgangs gemäß einem der Ansprüche 1 bis 9 umsetzt.

## Claims

1. Method for managing a recharging session of a traction battery (7) for an electrified motor vehicle (20) comprising the determination of a target state of charge level controlling the stopping of the recharging session, comprising the following steps:
- Recording (33) a quantity of recharged energy (QER) during a recharge session,
- The configuration (38) of the target state of charge level ( SOCc ) as a function of said quantity of recharged energy (QER),
**characterized in that** it further comprises the following steps:
- Recording (33) a recharge history (HR) from the quantity of energy recharged (QER) at each recharge session,
- Determination (35) of a cumulative distribution function (CDF) of the recharge history (HR),
- The determination (37) of at least one value of an energy requirement (VBE) at from the distribution function (CDF),
- SOCc ) level to said value of the
energy requirement (VBE),
the cumulative distribution function (CDF) being a cumulative probability function
modeling the cumulative probability of a quantity of recharged energy (QER) from the recharge history, the determination of the value of the energy requirement (VBE) comprising:
- The determination (36) of a first quantity of energy (QE1) covering a first probability (P1) of the distribution function (CDF),
- The determination (36) of a second quantity of energy (QE2) covering a second probability (P2) of the distribution function (CDF) greater than the first probability (P1),
- The selection (37) of the maximum value between on the one hand the first quantity (QE1) added to a third predetermined quantity (QE3) and, on the other hand the second quantity (QE2).

2. Method according to claim 1, **characterized in that** the value of the need energy (VBE) is equal to the maximum value ( QEmax ) plus a fourth predetermined amount of energy (QE4).

3. Method according to claim 1 or 2, **characterized in that** the target state of charge level ( SOCc ) is updated at each series of n successive charging sessions, where n is a positive integer.

4. Method according to claim 3, **characterized in that** it further comprises:
each update of the target state of charge level ( SOCc ), determining a first and a second value of the target state of charge level ( SOCcn , SOCc ₙ₊₁ ) for a first series (H Rn) and a second series (HR ₙ₊₁ ) respectively, the comparison of the first and second value ( SOCc ₙ, SOCc ₙ₊₁ ), and when the deviation is greater than a predetermined threshold,
the resetting of the recharge history ( HR) by the second series, when the gap is lower than said threshold, the addition of the second series to the recharge history ( HR).

5. Method according to claim 1, **characterized in that** the method comprises in in addition to the following steps for recording the quantity of energy recharged (QER):
- When the connection of the vehicle (30) to a charging station (6) is detected, the acquisition (31) of the instantaneous state of charge ( SOCt ) of the battery (7),
- Calculation (32) of the load deviation (QER) between the instantaneous state of charge ( SOCt ) and the target state of charge level ( SOCc ) of the charging session,
the recording (33) of the recharge history (HR) consisting of recording the number of occurrences of each load deviation value (QER) in a recharge table.

6. Method according to claim 5, **characterized in that** the value of the energy requirement (VBE) is equal to the maximum value ( QEmax ) plus a fourth predetermined quantity of energy (QE4).

7. Method according to claim 5 or 6, **characterized in that** the state level of charge (SOCc) is updated at each series of n successive charging sessions, where n is a positive integer.

8. Method according to claim 7, **characterized in that** it further comprises, at each update of the target state of charge level ( SOCc ), the determination of a first and a second value of the target state of charge level ( SOCc ₙ, SOCc ₙ₊₁ ) for a first series ( HRn ) and a second series (HR ₙ₊₁ ) respectively, comparing the first and second values ( SOCc ₙ, SOCc ₙ₊₁ ), and when the deviation is greater than a predetermined threshold, resetting the recharge history (HR) by the second series, when the deviation is less than said threshold, adding the second series to the recharge history (HR).

9. Method according to any one of claims 1 to 8 , **characterized in that** it further comprises the operation of an electrical recharge of the battery (7) of the vehicle (20) and the control of the stopping of the recharge when the instantaneous state of charge ( SOCt ) reaches the target state of charge level ( SOCc ).

10. Electrified motor vehicle (20) comprising a traction battery system (7) and a device (1) for managing a recharging session of the battery system (7), **characterized in that** said device (1) is configured to implement the method for managing a charging session according to any one of claims 1 to 9.
